# EUROPÄISCHE PATENTSCHRIFT

(11) **EP 1 031 280 B1**
(45) Veröffentlichungstag und Bekanntmachung des Hinweises auf die Patenterteilung: **18.12.2002**
(21) Anmeldenummer: 00103011.3
(22) Anmeldetag: 15.02.2000
(51) Int. Cl.: A01N 37/44

(54) **Desinfektionsmittelkonzentrat**
Concentrate of disinfecting agent
Concentré d'un agent désinfectant

(30) Priorität: 27.02.1999 DE 19908553
(43) Veröffentlichungstag der Anmeldung: 30.08.2000
(73) Patentinhaber: Goldschmidt AG, 45127 Essen (DE)
(72) Erfinder: Hilmes, Wilfried, 45326 Essen (DE); Müller, Felix, Dr., 42555 Velbert (DE); Schramm, Herbert, 45289 Essen (DE)

(56) Entgegenhaltungen:
- EP-A- 0 156 275
- EP-A- 0 343 605
- EP-A- 0 612 470
- WO-A-94/09105
- WO-A-99/35912

## Beschreibung

Die Erfindung betrifft ein Desinfektionsmittelkonzenztrat und seine Verwendung zur Flächen- und Instrumentendesinfektion unter besonderer Berücksichtigung der Wirkung gegenüber Mycobacterium terrae sowie Gram⁻/Gram⁺-Bakterien im Anwendungsbereich unter 10 °C.

Als säureresistente Bakterien, die sich durch eine Wachshülle schützen, zeigen Mycobakterien ein gewisses Resistenzverhalten gegenüber üblichen chemischen Desinfektionsverfahren. Sie werden aber durch Phenole, Aldehyde und Alkylamine unter Einhaltung eines entsprechenden Zeit-/Konzentrationsfaktors sicher abgetötet (siehe Desinfektionsmittel-Liste der DGHM, 1997, mhp-Verlag, Wiesbaden).

Trotz sicherer Abtötung zeigen jedoch Phenole, Aldehyde und Alkylamine üblicherweise ein wenig attraktives physiko-chemisches wie auch toxikologisches/ökotoxikologisches Profil. Besitzen Aldehyde ein durchaus nicht auszuschließendes sensibilisierendes Potential, so folgen Phenole einem nur ungenügenden Bioabbau und besitzen, wie auch die Alkylamine mit ausgeprägter mikrobizider Wirkung, z. B. unverzweigte Alkylamine mit 2 bis 5 aktiven Stickstoffzentren, eine geringe Wasserlöslichkeit, die zu Trübungen der Anwendungslösungen führen und eine ungenügende Bioverfügbarkeit des Wirkstoffes resultieren lassen.

Obwohl die Wirksamkeit von bekannten Amphotensiden des Typs N-Alkyl-di(-aminoethyl)-glycin gegenüber Mycobakterien bereits in den 50er Jahren bewiesen wurde, so galt deren Wirksamkeit mit Einführung genormter Testverfahren (DVG/DGHM) jedoch als umstritten.

Amphotenside vom Typ N-Alkyl-di(-aminoethyl)-glycin bzw. N-Alkylaminopropylglycin zeigen neben einer ausgeprägten Wirksamkeit gegenüber Gram⁻/Gram⁺-Bakterien und Pilzen im Temperaturbereich 20 °C, auch bei Anwendung unter 10 °C-Bedingungen ein signifikantes Zeit-/Konzentrationsprofil (DVG-Liste). Bekannt ist auch das hohe Emulgiervermögen der Amphotenside des obengenannten Typs in wäßrigen Systemen, was sich in einer fast unbegrenzten Wasserlöslichkeit dokumentiert und eine nahezu vollständige Bioverfügbarkeit der Wirkstoffe gewährleistet. Ihr günstiges toxikologisches und ökotoxikologisches Profil liegt voll im Anforderungsbereich der zukünftigen gesetzlichen Biozidrichtlinien, die die Auswirkung eines Wirkstoffes oder eines bioziden Produktes auf Mensch und Umwelt beurteilt und die Vermarktung derselben im europäischen Markt regeln soll.

In der EP 0 612 470 werden Desinfektionsmittelkonzentrate beschrieben, welche langkettige sekundäre und/oder tertiäre Alkylamine in Kombination mit begrenzt wassermischbaren C₅₋₁₈-Alkylglykolen beschrieben, welche sich durch Geruchsarmut und Lagerstabilität auszeichnen sollen.

Die EP 0 156 275 beschreibt antimikrobiell wirksame Substanzen, hergestellt durch Umsetzung von N-substituierten Propylendiaminen mit Aminosäureestern und anschließender Alkoxylierung. Diese Verbindungen sind gemäß WO 94/09105 in Alkoholen und Glykolethern wie Ethanol oder Butyldiglykol bei Raumtemperatur nicht immer klar löslich.

Zur Verbesserung des Löslichkeitsverhaltens wird daher gemäß WO 94/09105 vorgeschlagen als Lösungsvermittler aromatische Alkohole wie 2-Phenoxyethanol, 1-Phenoxyethanol, Benzylalkohol zu verwenden.

Die EP 0 343 605 offenbart tuberkulozide Desinfektionsmittel auf Basis von N,N-Bis-(3-aminopropyl)-laurylamin welche als Lösungsmittel Wasser und kurzkettige Alkohole und zur Unterstützung der desinfizierenden Wirkung anionische oder nichtionische Tenside sowie Komplexbildner enthalten können.

Eine zeitgemäße Desinfektionsmittelentwicklung verlangt deshalb nach Ausnutzung an sich bekannter Eigenschaftsprofile von einzelnen mikrobiziden Substanzen, um durch deren Kombination synergistische Effekte zu erzielen.

Die Erfindung betrifft in einer ersten Ausführungsform ein Desinfektionsmittelkonzentrat auf Basis von Primärbioziden, dadurch gekennzeichnet, daß es eine Kombination aus
a) primären oder sekundären Alkylaminen der allgemeinen Formel I

   R - [ NR- ( CH₂)ₓ-]_{y} - NR₂ (I)

   wobei
   R = C₈ - C₁₈ unverzweigtes und gesättigtes Alkyl oder H
   x = 1 bis 4
   y = 1 bis 4,
   und
b) Amphotensiden auf der Basis von Alkylaminoessigsäuren der allgemeinen Formel II

   R¹NH - ( Cₙ H₂ₙ - NH )ₘ ( CH₂ - COOH )ₒ (II)

   wobei
   R¹ = C₈ - C₁₈ unverzweigtes und gesättigtes Alkyl
   n = 1 bis 3
   m = 1 bis 3
   o = 1
in Abmischung mit aliphatischen Glykolethern und Fettalkoholethoxylaten enthält.

Die erfindungsgemäß eingesetzten Wirk- und Hilfsstoffe sind für sich genommen bekannt. Überraschend wurde jedoch festgestellt, daß die Kombination von ausgewählten Primärmikrobiziden auf der Basis von Alkylaminen und Amphotensiden einen deutlichen Synergismus in der Abtötung gegenüber Mycobakterien sowie gegenüber Gram⁻/Gram⁺-Bakterien im 10 °C-Bereich aufweist.

Die Zugabe von wasserlöslichen oder mischbaren Glykolethern, ethoxylierten Fettalkoholen (Alkylpolyethylenglykolether) und gegebenenfalls Komplexierungsmitteln führt zu einer weiteren Steigerung des zuvor beschriebenen Synergieeffekts.

Als Alkylamine im Sinne der vorliegenden Erfindung werden vorzugsweise Oligotypen eingesetzt, d. h., 2 bis 4 aufeinanderfolgende N-Atome sind verbunden durch 1 bis 3 Alkylengruppen. 2 bis 3 aufeinanderfolgende N-Atome werden jedoch bevorzugt. Die C-Kettenverteilung der Alkylreste solcher Oligoamine liegt zwischen C8-C18. Die Alkylgruppen sind insbesondere unverzweigt und gesättigt. Die Alkylreste C12/C14 sind vorzugsweise dominant und zu 60/40 vertreten. In den DE-B-19 28 192, 19 44 255 und 21 15 549 wird der mikrobizide Charakter solcher Verbindungen allein bereits beschrieben.

Amphotenside stellen die zweite Primärwirkstoffkomponente zur Formulierung des erfindungsgemäßen Desinfektionsmittelkonzentrates dar. Sie sind vorzugsweise Reaktionsprodukte aus Alkyloligoaminen, mit 2 bis 4 aufeinanderfolgenden N-Atomen, verbunden durch 1 bis 3 Alkylengruppen, vorzugsweise jedoch 2 bis 3 aufeinanderfolgende N-Atome. Die C-Kettenverteilung der Alkylreste solcher Amphotenside liegt insbesondere zwischen C₈-C₁₈. Sie sind vorzugsweise unverzweigt und gesättigt. Die Alkylreste C12/C14 sind vorzugsweise dominant und zu 60/40 vertreten. Ihre Herstellung ist durch die DE-B-19 51 156 und 19 28 192 beschrieben.

Die erfindungsgemäßen Mittel enthalten neben den Primärbioziden weitere Hilfsstoffe mit wichtigen Funktionen. Sie tragen zur Steigerung des inhärenten Mikrobizidpotentials der zuvorgenannten Komponenten bei.

Aliphatische Glykolether fungieren als Lösungsvermittler. Bevorzugt werden Ether des Propylenglykols, insbesondere höhere Homologe, wie Di- und Trioligomere, eingesetzt. Sie sind besonders gekennzeichnet durch ihre hohe Wasserlöslichkeit bei gegebenem HLB-Wert von 8,1 bis 8,5 und Flammpunkten von 75 bis 120 °C.

Zur Aufrechterhaltung der physikalischen Stabilität der erfindungsgemäßen Mittel kommen aufgrund ihrer emulgierenden Wirkung Fettalkoholethoxylate, nämlich Alkylpolyethylenglykolether zur Anwendung. Deren Alkylkette kann geradkettig oder verzweigt sein und darf eine Kettenverteilung beispielsweise von C₆-C₁₈ aufweisen. Der Alkylenoxid-, insbesondere Ethylenoxid-Gehalt der zur Anwendung kommenden Verbindungen kann insbesondere 3 bis 20 Mol betragen.

Gegebenenfalls enthaltende Komplexbildner maskieren die Härtebildner des Wassers und schalten somit deren negativen Einfluß auf die Mikrobizide der Primärbiozide aus. Verwendet werden neben den bevorzugten Vertretern, wie NTA und ETDA, auch PAPS, MGDA, EDDS, Citrate, Gluconate, Polycarboxylate und/oder ATMP.

Von Bedeutung ist die Einstellung des pH-Wertes der erfindungsgemäßen Mittel. Er sollte vorzugsweise im deutlich alkalischen Bereich liegen und sich etwa von pH 9 bis 11 erstrecken. Höhere pH-Werte sind bei der gegebenen Wirkstoffkombination nicht möglich und führen zu chemischen Inkompatibilitäten. Tiefere pH-Werte führen zu deutlichen Wirksamkeitsverlusten im angegebenen Wirkungsbereich der erfindungsgemäßen Mittel. Zum Einstellen des pH-Wertes verwendet man zweckmäßig schwache organische Säuren, vorzugsweise Essigsäure. Geeignet sind jedoch auch Ameisensäure oder auch mehrfunktionelle Säuren, wie beispielsweise Citronensäure, Milchsäure oder Weinsäure.

In keiner Weise vorhersehbar war die Tatsache, daß die Kombination der zuvor beschriebenen Komponenten eine synergistische Verschiebung des Wirksamkeitsspektrums hinsichtlich des Verhaltens solcher Mittel gegenüber Mycobakterien, als auch deren sichere Wirkung gegenüber Bakterien im 10 °C-Anwendungsbereich ergab. Desinfektionsmittel auf Basis der erfindungsgemäß definierten Mittel lassen sich somit als hochwirksame Präparate zur Flächen- und Instrumentendesinfektion einsetzen.

Gegenstand der Erfindung ist vorzugsweise ein mikrobizides Mittel, enthaltend eine Wirkstoffkombination aus
a) primären oder sekundären Alkylaminen der allgemeinen Formel I

   R - [ NR- ( CH₂)ₓ-]_{y} - NR₂ (I)

   wobei
   R = C₈ - C₁₈ unverzweigtes und gesättigtes Alkyl oder H
   x = 1 bis 4
   y = 1 bis 4
   der Anteil an Alkylamin 1 bis 20 Gew.-%, vorzugsweise 4 bis 8 Gew.-% beträgt,
b) Amphotensiden auf der Basis von Alkylaminoessigsäuren der allgemeinen Formel II

   R¹NH - ( CₙH₂ₙ - NH )ₘ ( CH₂ - COOH )ₒ (II)

   wobei
   R¹ = C₈ - C₁₈ unverzweigtes und gesättigtes Alkyl
   n = 1 bis 3
   m = 1 bis 3
   o = 1 bis 2
   der Anteil an Amphotensid 1 bis 20 Gew.-%, vorzugsweise 2 bis 5 Gew.-% beträgt,
c) aliphatischen Glykolethern der allgemeinen Formel III

   R -[ O- ( CH₂)ₓ ]_{y} - O - H (III)

   wobei
   R = C₁ - C₄ Alkyl
   x = 2 bis 4
   y = 2 bis 4
   der Anteil an Glykolether 2 bis 15 Gew.-%, vorzugsweise 5 bis 8 Gew.-% beträgt,
d) Fettalkoholethoxylaten (Alkylpolyethylenglykolether) der allgemeinen Formel IV

   R ( O - CH₂ - OH₂ )ₙ OH (IV)

   wobei
   R = C₆-C₁₈ Alkyl
   n = 3 bis 20
   der Anteil an Alkylpolyethylenglykolether insbesondere 2 bis 10 Gew.-%, vorzugsweise 4 bis 7 Gew.-% beträgt und
e) gegebenenfalls Komplexbildner, wie Phosphonate, NTA u. ETDA auch PAPS, MGDA, EDDS, Citrate, Gluconate, Polycarboxylate und/oder ATMP, wobei
   der Anteil an Komplexbildnern sich nach dem Kalziumbindevermögen der aufgeführten Spezies richtet. Bezogen auf NTA/EDTA sollte die Konzentration insbesondere zwischen 5 bis 15 Gew.-% liegen, vorzugsweise 7 bis 10 Gew.-%.

Die pH-Werteinstellung der Wirkstoffkombination erfolgt vorzugsweise durch Zugabe von organischen Säuren. Der pH-Wert sollte zwischen 9 bis 11 liegen, vorzugsweise pH 9,8 betragen. Die Viskosität kann durch geringe Mengen an Alkohol, beispielsweise Ethanol oder I-Propanol (< 2 %) korrigiert werden.

Eine weitere Ausführungsform der vorliegenden Erfindung betrifft die Verwendung der beschriebenen Desinfektionsmittelkonzentrate zur Herstellung klarer wäßriger gebrauchsfertiger Lösungen. Insbesondere werden diese auf eine Konzentration von 0,1 bis 6 Gew.-%, insbesondere 0,5 bis 4 Gew.-% verdünnt.

### Ausführungsbeispiel:

Die Erfindung wird anhand eines Beispiels näher erläutert.

Die Zubereitung/Herstellung des Desinfektionsmittelkonzentrates erfolgte in einer üblichen Rührapparatur. Die Komponenten wurden in der angegebenen Reihenfolge miteinander vermischt.

### Beispiel 1

**Tabelle 1:**

| Komponenten | Anteil in Gew.-% |
|---|---|
| Amphotensid auf Basis Alkylpropylendiamin (Tego 2000®) | 3 |
| Alkylpropylendiamin (Genamin®LAP100) | 4 |
| Dipropylenglykolmonomethylether (Dowanol DPM® | 6 |
| PEG 12 Isotridecanol (TEGO® Alkanol TD12) | 4 |
| NTA | 9 |
| Zusatzstoffe (aliphatischer Alkohol < 2 %, org. Säure zur pH-Einstellung, Restwasser) | auf 100 pH-Wert 9,8 ± 0,3 |

Die Bestimmung der mikrobiziden Wirkung des erfindungsgemäßen Mittels gegenüber Mycobakterien erfolgte gemäß den Richtlinien der DGHM (Hyg. Med. 1996; 21. 375-380). Für die Ermittlung der Wirksamkeit gegenüber Gram⁻/Gram⁺-Bakterien im Anwendungsbereich 10 °C erfolgte die Prüfung gemäß den Richtlinien der Europäischen Union (CEN EN 1276, Juni 1997). Es handelt sich hier um quantitative Suspensionsversuche mit und ohne organische Belastung.

Für die Wirksamkeit eines Desinfektionsmittels gegenüber Mycobakterien gilt eine Konzentration-Zeit-Relation, in welcher bei den Versuchen ohne Belastung eine Reduktion um 4 log-Einheiten nachgewiesen wird. Geprüft wird bei 20 °C. Der Einfluß der Belastung ist im Prüfbericht zu dokumentieren.

Der CEN EN 1276 fordert eine Konzentration-Zeit-Relation von 5 log-Einheiten innerhalb von 5 Minuten. Geprüft wird mit und ohne Belastung bei 20 °C oder wahlweise alternativer Temperatur beispielsweise 10 °C. Alle Versuche erfolgen unter Verwendung entsprechender Enthemmersysteme.

Die Ergebnisse sind nachfolgend dokumentiert. Die dokumentierten Ergebnisse sind Mittelwerte von Doppelversuchen und resultieren mindestens aus drei Versuchen an unterschiedlichen Tagen.

Prüfpräparat: Beispiel 1 / Wirksamkeit gegenüber Mycobacterium terrae

| | |
|---|---|
| Methode | quantitativer Suspensionsversuch |
| Temperatur | 20 °C |
| Bedingungen | Reduktion 4 log-Einheiten |
| Belastung | keine |

**Tabelle 2:**

| | | **Einwirkzeit in Minuten** | | | | | | | | |
|---|---|---|---|---|---|---|---|---|---|---|
| | | **15'** | | | **30'** | | | **60'** | | |
| **Konz.des Präparates %** | **Vardünnungs-Reihe** | **KBE** | | **log Reduktion** | **KBE** | | **log Reduktion** | **KBE** | | **log Reduktion** |
| 6 | 10⁻¹ | 0 | 0 | | 0 | 0 | | 0 | 0 | |
| | 10⁻² | 0 | 0 | | 0 | 0 | | 0 | 0 | |
| | 10⁻³ | 0 | 0 | > 4,45 | 0 | 0 | > 4,44 | 0 | 0 | > 4,48 |
| | 10⁻⁴ | 0 | 0 | | 0 | 0 | | 0 | 0 | |
| | 10⁻⁵ | 0 | 0 | | 0 | 0 | | 0 | 0 | |
| 4 | 10⁻¹ | 4540 | 5000 | | 1 | 0 | | 0 | 0 | |
| | 10⁻² | 0 | 0 | | 0 | 0 | | 0 | 0 | 5,15 |
| | 10⁻³ | 0 | 0 | 2,69 | 0 | 0 | 4,74 | 0 | 0 | |
| | 10⁻⁴ | 0 | 0 | | 0 | 0 | | 0 | 0 | |
| | 10⁻⁵ | | | | 0 | 0 | | 0 | 0 | |
| 2 | 10⁻¹ | + | + | | 1948 | 1252 | | 0 | 0 | |
| | 10⁻² | 53 | 29 | | 0 | 0 | | 0 | 0 | > 5,15 |
| | 10⁻³ | 4 | 5 | 2,74 | 0 | 0 | 2,14 | 0 | 0 | |
| | 10⁻⁴ | 1 | 1 | | 0 | 0 | | 0 | 0 | |
| | 10⁻⁵ | 0 | 0 | | 0 | 0 | | 0 | 0 | |
| 1 | 10⁻¹ | + | + | | + | 0 | | 2430 | 4800 | |
| | 10⁻² | 8700 | 7500 | | 1810 | 2670 | | 0 | | 2,59 |
| | | | | | | | | | 0 | |
| | 10⁻³ | 0 | 0 | 1,44 | 0 | 0 | 1,99 | 0 | | |
| | | | | | | | | | 0 | |
| | 10⁻⁴ | 0 | 0 | | 0 | 0 | | 0 | | |
| | | | | | | | | | 0 | |
| | 10⁻⁵ | | | | | | | | | |

**Tabelle 3:**

| Bezugswerte | | 15' | 30' | 60' |
|---|---|---|---|---|
| KO₁ log KBR/ml | | 6,35 | 6,34 | 6,15 |
| KO₂ log KBE/ml | | | | 6,87 |
| KO₃ log KBE/ml | | | | 7,10 |

### Prüfpräparat: Beispiel 1 / Wirksamkeit gegenüber Mycobacterium terrae

| | |
|---|---|
| Methode | quantitativer Suspensionsversuch |
| Temperatur | 20 °C |
| Bedingungen | Reduktion 4 log-Einheiten |
| Belastung | 0,5 % defibriniertes Schafsblut |

**Tabelle 4:**

| | | **Einwirkzeit in Minuten** | | | | | | | | |
|---|---|---|---|---|---|---|---|---|---|---|
| | | **15'** | | | **30'** | | | **60'** | | |
| **Konz.des Präparates %** | **Verdünnungs-Reihe** | **KBE** | | **log Reduktion** | **KBE** | | **log Reduktion** | **KBE** | | **log Reduktion** |
| 6 | 10⁻¹ | 0 | 0 | | 0 | 0 | | 0 | 0 | |
| | 10⁻² | 0 | 0 | | 0 | 0 | | 0 | 0 | |
| | 10⁻³ | 0 | 0 | > 5,01 | 0 | 0 | > 5,12 | 0 | 0 | > 5,25 |
| | 10⁻⁴ | 0 | 0 | | 0 | 0 | | 0 | 0 | |
| | 10⁻⁵ | 0 | 0 | | 0 | 0 | | 0 | 0 | |
| 4 | 10⁻¹ | 0 | 0 | | 0 | 0 | | 0 | 0 | |
| | 10⁻² | 0 | 0 | | 0 | 0 | | 0 | 0 | |
| | 10⁻³ | 0 | 0 | > 5,01 | 0 | 0 | > 5,12 | 0 | 0 | > 5,25 |
| | 10⁻⁴ | 0 | 0 | | 0 | 0 | | 0 | 0 | |
| | 10⁻⁵ | 0 | 0 | | 0 | 0 | | 0 | 0 | |
| 2 | 10⁻¹ | 108 | 13 | | 1948 | 1252 | | 0 | 0 | |
| | 10⁻² | 0 | 0 | 3,23 | 0 | 0 | > 5,12 | 0 | 0 | > 5,25 |
| | 10⁻³ | 0 | 0 | | 0 | 0 | | 0 | 0 | |
| | 10⁻⁴ | 0 | 0 | | 0 | 0 | | 0 | 0 | |
| | 10⁻⁵ | 0 | 0 | | 0 | 0 | | 0 | 0 | |
| 1 | 10⁻¹ | + | + | | + | + | | 0 | 0 | |
| | 10⁻² | + | + | | + | + | | 0 | 0 | > 5,12 |
| | 10⁻³ | + | + | 0,0 | + | + | 0,0 | 0 | 0 | |
| | 10⁻⁴ | + | + | | + | + | | 0 | 0 | |
| | 10⁻⁵ | + | + | | + | + | | 0 | 0 | |

**Tabelle 5:**

| Bezugswerte | | 15' | 30' | 60' |
|---|---|---|---|---|
| KO₁ log KBR/ml | | 6,01 | 6,12 | 6,25 |
| KO₂ log KBE/ml | | | | 7,12 |
| KO₃ log KBE/ml | | | | 6,11 |
| + nicht auszählbar | | | | |

### Vergleich von Beispiel 1 zu Aldoquats und Quat/Alkylaminen bzw. Quat/Guanidin

Die Vorzüge des erfindungsgemäßen Mittels werden anhand eines Vergleichs mit einem auf handelsüblichem Aldehyd/Quat basierenden Produkt bzw. mit Kombinationspräparaten auf Basis membranaktiver Wirkstoffe (beispielsweise Quat/Alkylamin und Quat/Guanidin), welche alternativ zur Abtötung von Mycobacterium an Instrumenten zum Einsatz kommen, aufgezeigt werden. Die Zusammensetzung des Alternativpräparates auf Aldehyd/Quat-Basis wird nachfolgend grob skizziert.
15 % Aldehyd; zu gleichen Anteilen verteilt auf Glutardialdehyd, Formaldehyd, Glyoxal
6 % Quat, vom Typ Benzalkoniumchlorid
20 % nichtionisches Tensid

Die Zusammensetzung der membranaktiven Präparate ist unbekannt.

### Prüfpräparat: Beispiel 2 / Wirksamkeit gegenüber Mycobacterium terrae

| | |
|---|---|
| Methode | quantitativer Suspensionsversuch |
| Temperatur | 20 °C |
| Bedingungen | Reduktion 4 log-Einheiten |
| Belastung | keine |

**Tabelle 6:**

| | | **Einwirkzeit in Minuten** | | | | | | | | |
|---|---|---|---|---|---|---|---|---|---|---|
| | | **15'** | | | **30'** | | | **60'** | | |
| **Konz.des Präparates %** | **Verdünnungs-Reihe** | **KBE** | | **log Reduktion** | **KBE** | | **log Reduktion** | **KBE** | | **log Reduktion** |
| | 10⁻¹ | + | + | | + | + | | 2 | 0 | |
| | 10⁻² | + | + | | 48 | 78 | | 0 | 0 | |
| 6 | 10⁻³ | 113 | 73 | 0,67 | 21 | 3 | 1,96 | 0 | 0 | 5,04 |
| | 10⁻⁴ | 7 | 3 | | 2 | 0 | | 0 | 0 | |
| | 10⁻⁵ | 0 | 0 | | 0 | 0 | | 0 | 0 | |
| | 10⁻¹ | + | + | | + | + | | + | + | |
| | 10⁻² | + | + | | + | + | | + | + | |
| 4 | 10⁻³ | 120 | 270 | 0,35 | 218 | 176 | 0,52 | 10 | 11 | 2,02 |
| | 10⁻⁴ | 4 | 15 | | 12 | 17 | | 0 | 1 | |
| | 10⁻⁵ | 0 | 0 | | 0 | 0 | | 0 | 0 | |
| | 10⁻¹ | + | + | | + | + | | + | + | |
| | 10⁻² | + | + | | + | + | | + | + | |
| 2 | 10⁻³ | 286 | 173 | 0,31 | 142 | 222 | 0,53 | 102 | 212 | 0,84 |
| | 10⁻⁴ | 14 | 25 | | 33 | 23 | | 9 | 16 | |
| | 10⁻⁵ | 0 | 0 | | 0 | 0 | | 0 | 0 | |

**Tabelle 7:**

| Bezugswerte | | 15' | 30' | 60' |
|---|---|---|---|---|
| KO₁ log KBE/ml | | 5,64 | 5,81 | 6,04 |
| KO₂ log KBE/ml | | | | < 1 |
| KO₃ log KBE/ml | | | | 7,07 |
| + nicht auszählbar | | | | |

Aufgrund der schwachen Wirksamkeit wurde auf den Belastungsversuch verzichtet.

Die in der DGHM-Liste 1997 aufgeführten Präparate auf Aldehyd/Quat-Basis zur Abtötung von Mycobacterium weisen zum Teil zwar günstigere Ergebnisse auf, müssen sich aber bei einer Abschätzung ihres Risikopotentials der Diskussion stellen.

Bei einem Vergleich von Beispiel 1 mit anderen ähnlichen Wirkstoffvertretern, beispielsweise Quat/Alkylaminen oder Quat/Guanidin, wie sie in der aktuellen DGHM-Liste ebenfalls zur Abtötung von Mycobacterium aufgeführt werden, fällt auf, daß sich die Ergebnisse innerhalb der Vertreter dieser Gruppe in etwa deckungsgleich verhalten. Es zeigte sich jedoch erfindungsgemäß eine nicht zu erwartende Wirkungssteigerung bei Belastung mit defibriniertem Schafsblut.

### Prüfpräparat: Beispiel 1 / Wirksamkeit gegenüber Gram⁻/Gram⁺-Bakterien gemäß EN 1276

Es wird die Fähigkeit eines Produktes bestimmt, die Anzahl lebender vegetativer Bakterienzellen bestimmter Referenzstämme unter den Bedingungen dieser Europäischen Norm zu vermindern. Die Anforderungen werden nachfolgend grob skizziert:

Als Testorganismen wurden verwendet:

| | |
|---|---|
| Pseudomonas aeruginosa | ATCC 15442 |
| Escherichia coli | ATCC 10536 |
| Staphylococcus aureus | ATCC 6538 |
| Enterococcus hirae | ATCC 10541 |

Weitere Bedingungen waren:

| | |
|---|---|
| Temperatur | 10°C ± 1°C |
| Kontaktzeit | 5 min ± 10 s |
| niedrige Belastung | 0,03 % Rinderalbumin |
| höhere Belastung | 0,3 % Rinderalbumin |
| Lösungen u. Testlösungen | Ansatz in Wasser mit 300 ppm CaCO₃ |

Es wurden 3 verschiedene Konzentrationen getestet, die den aktiven als auch den inaktiven Bereich der Wirkung erfassen sollen. Eine Reduzierung der Gesamtkeimzahl um 5 log-Einheiten wird gefordert. Die entsprechenden Konzentrationen, die bei 10 °C die Anforderungen des EN 1276 erfüllen, sind nachfolgend zusammengefaßt.

**Tabelle 8:**

| Produkt | Die sichere Konzentration (%), bei welcher eine Reduktion von 5 log-Einheiten erreicht wurde, ist angegeben | | | | |
|---|---|---|---|---|---|
| Beispiel 1 | Testkonzentration | P. aeruginosa ATCC 15442 | E. coli ATCC 10536 | S.aureus ATCC 6538 | E. hirae ATCC 10541 |
| niedrige Belastung | 2,0 | | | | |
| | 1,0 | 1,0 | | | |
| | 0,5 | | 0,5 | 0,5 | 0,5 |
| höhere Belastung | 2,0 | | | | |
| | 1,0 | 1,0 | | | |
| | 0,5 | | 0,5 | 0,5 | 0,5 |

Anhand der Tabellen zeigt sich, daß durch die erfindungsgemäße Kombination der Komponenten eine deutliche synergistische Verschiebung des Wirksamkeitsspektrums hinsichtlich des Verhaltens solcher Mittel gegenüber Mycobakterien stattgefunden hat. Die Wirkung gegenüber Bakterien im 10 °C-Anwendungsbereich kann ebenfalls als gesichert angesehen werden. Außerdem zeigt sich, daß das erfindungsgemäße Mittel einen allenfalls sehr geringen Eiweißfehler aufweist.

## Patentansprüche

1. Desinfektionsmittelkonzentrat auf Basis von Primärbioziden, **dadurch gekennzeichnet, daß** es eine Kombination aus
a) primären oder sekundären Alkylaminen der allgemeinen Formel I
R - [ NR- ( CH₂)ₓ-]_{y} - NR₂ (I)
wobei
R = C₈ - C₁₈ unverzweigtes und gesättigtes Alkyl oder H
x = 1 bis 4
y = 1 bis 4,
und
b) Amphotensiden auf der Basis von Alkylaminoessigsäuren der allgemeinen Formel II
R¹NH - ( Cₙ H₂ₙ - NH )ₘ ( CH₂ - COOH )ₒ (II)
wobei
R¹ = C₈ - C₁₈ unverzweigtes und gesättigtes Alkyl
n = 1 bis 3
m = 1 bis 3
o = 1
in Abmischung mit
c) aliphatischen Glykolethern der allgemeinen Formel III
R -[ O- ( CH₂)ₓ ]_{y} - O - H (III)
wobei
R = C₁ - C₄ Alkyl
x = 2 bis 4
y = 2 bis 4
und
d) Fettalkoholethoxylaten (Alkylpolyethylenglykolether) der allgemeinen Formel IV
R ( O - CH₂ - CH₂ )ₙ OH (IV)
wobei
R = C₆-C₁₈ Alkyl
n = 3 bis 20
enthält.

2. Desinfektionsmittelkonzentrat nach Anspruch 1, **dadurch gekennzeichnet, daß** die aliphatischen Glykolether endständige Alkylreste (R) mit C-Kettenlängen von C₁-C₄ umfassen.

3. Desinfektionsmittelkonzentrat nach Anspruch 1 oder 2, **dadurch gekennzeichnet, daß** die Fettalkoholethoxylate (Alkylpolyethylenglykolether) geradkettige oder verzweigte Starteralkohole mit einer C-Kettenlänge des endständigen Alkylrestes (R) von 6 bis 18 umfassen und EO-Sequenzen von 3 bis 20 Mol aufweisen.

4. Desinfektionsmittelkonzentrat nach einem der Ansprüche 1 bis 3, **dadurch gekennzeichnet, daß** es Komplexbildner enthält, insbesondere ETDA und/oder NTA.

5. Desinfektionsmittelkonzentrat nach einem der Ansprüche 1 bis 4, **dadurch gekennzeichnet, daß** es etwa 1 bis 20 Gew.-% Primärbiozid auf der Basis von Alkylaminen der allgemeinen Formel I und/oder den Amphotensiden der allgemeinen Formel II, insbesondere 6 bis 10 Gew.-% enthält.

6. Desinfektionsmittelkonzentrat nach einem der Ansprüche 1 bis 5, enthaltend 3 bis 8 Gew.-%, vorzugsweise 5 bis 7 Gew.-% Alkylamin der allgemeinen Formel I.

7. Desinfektionsmittelkonzentrat nach einem der Ansprüche 1 bis 6, enthaltend 2 bis 5 Gew.-% Alkylaminoessigsäure der allgemeinen Formel II, vorzugsweise 3 bis 4 Gew.-%.

8. Desinfektionsmittelkonzentrat nach einem der Ansprüche 1 bis 7, **dadurch gekennzeichnet, daß** es 2 bis 15 Gew.-% Glykolether enthält, insbesondere 5 bis 8 Gew.-%.

9. Desinfektionsmittelkonzentrat nach einem der Ansprüche 1 bis 8, **dadurch gekennzeichnet, daß** es 2 bis 10 Gew.-% Fettalkoholethoxylate (Alkylpolygloykolether) auf der Basis von Starteralkoholen mit endständigem Alkylrest von R = C₆-C₁₈ und 3 bis 20 Mol EO, insbesondere 4 bis 7 Gew.-% und 5 bis 15 Gew.-% Komplexbildner, berechnet auf EDTA/NTA, insbesondere 7 bis 10 Gew.-% enthält.

10. Desinfektionsmittelkonzentrat nach einem der Ansprüche 1 bis 9, **dadurch gekennzeichnet, daß** der pH-Wert der Mischung 9 bis 11, insbesondere 9,5 bis 10,5 beträgt.

11. Verwendung der Desinfektionsmittelkonzentrate nach einem der Ansprüche 1 bis 10, **dadurch gekennzeichnet, daß** man diese in Konzentrationen von 0,1 bis 6,0 Gew.-%, insbesondere 0,5 bis 4 Gew.-% zur Herstellung klarer wäßriger gebrauchsfertiger Lösungen einsetzt.

## Claims

1. Disinfectant concentrate based on primary biocides, **characterized in that** it comprises a combination of
a) primary or secondary alkylamines of the general formula I
R - [NR-(CH₂)ₓ-]_{y} - NR₂ (I)
where
R = C₈ - C₁₈ unbranched and saturated alkyl or H
x = 1 to 4
y = 1 to 4,
and
b) amphoteric surfactants based on alkylaminoacetic acids of the general formula II
R¹NH - (CₙH₂ₙ - NH)ₘ (CH₂ - COOH)ₒ (II)
where
R¹ = C₈ - C₁₈ unbranched and saturated alkyl
n = 1 to 3
m = 1 to 3
o = 1
in a mixture with
c) aliphatic glycol ethers of the general formula III
R-[O-(CH₂)ₓ]_{y}-O-H (III)
where
R = C₁ - C₄ alkyl
x = 2 to 4
y = 2 to 4
and
d) Fatty alcohol ethoxylates (alkyl polyethylene glycol ethers) of the general formula IV
R (O-CH₂-CH₂)ₙOH (IV)
where
R = C₆-C₁₈ alkyl
n = 3 to 20.

2. Disinfectant concentrate according to Claim 1, **characterized in that** the aliphatic glycol ethers contain terminal alkyl radicals (R) having carbon chain lengths of C₁-C₄.

3. Disinfectant concentrate according to Claim 1 or 2, **characterized in that** the fatty alcohol ethoxylates (alkyl polyethylene glycol ethers) contain unbranched or branched starter alcohols having a carbon chain length of the terminal alkyl radicals (R) of 6 to 18 and have EO sequences of 3 to 20 mol.

4. Disinfectant concentrate according to one of Claims 1 to 3, **characterized in that** it comprises complexing agents, in particular EDTA and/or NTA.

5. Disinfectant concentrate according to one of Claims 1 to 4, **characterized in that** it comprises about 1 to 20% by weight of primary biocide based on alkylamines of the general formula I and/or the amphoteric surfactants of the general formula II, in particular 6 to 10% by weight.

6. Disinfectant concentrate according to one of Claims 1 to 5 comprising 3 to 8% by weight, preferably 5 to 7% by weight, of alkylamine of the general formula I.

7. Disinfectant concentrate according to one of Claims 1 to 6, comprising 2 to 5% by weight of alkylaminoacetic acid of the general formula II, preferably 3 to 4% by weight.

8. Disinfectant concentrate according to one of Claims 1 to 7, **characterized in that** it comprises 2 to 15% by weight of glycol ethers, in particular 5 to 8% by weight.

9. Disinfectant concentrate according to one of Claims 1 to 8, **characterized in that** it comprises 2 to 10% by weight of fatty alcohol ethoxylates (alkyl polyglycol ethers) based on starter alcohols having a terminal alkyl radical of R = C₆-C₁₈ and 3 to 20 mol of EO, in particular 4 to 7% by weight, and 5 to 15% by weight of complexing agent, calculated on EDTA/NTA, in particular 7 to 10% by weight.

10. Disinfectant concentrate according to one of Claims 1 to 9, **characterized in that** the pH of the mixture is 9 to 11, in particular 9.5 to 10.5.

11. Use of the disinfectant concentrate according to one of Claims 1 to 10, **characterized in that** these are used at a concentration of 0.1 to 6.0% by weight, in particular 0.5 to 4% by weight, for producing clear aqueous ready-to-use solutions.

## Revendications

1. Concentrat de désinfectant à base de biocides primaires, **caractérisé en ce qu'**il contient une combinaison
a) d'alkylamines primaires ou secondaires de formule générale I
R-[NR-(CH₂)ₓ-]_{y}-NR₂ (I)
dans laquelle
R = un alkyle en C₈ à C₁₈, non ramifié et saturé ou H
x = 1 à 4,
y = 1 à 4
et
b) d'agents tensioactifs amphotères à base d'acides alkylaminoacétiques de formule générale II
R¹NH-(CₙH₂ₙ-NH)ₘ(CH₂-COOH)ₒ (II)
dans laquelle
R¹ = un alkyle en C₈ à C₁₈ non ramifié et saturé
n = 1 à 3
m = 1 à 3
o = 1
en mélange avec
c) des glycoléthers aliphatiques de formule générale III
R-[O-(CH₂)ₓ]_{y}-O-H (III)
dans laquelle
R = un alkyle en C₁ à C₄
x = 2 à 4
y = 2 à 4
et
d) des éthoxylates d'alcool gras (alkylpolyéthylèneglycoléther) de formule générale IV
R(O-CH₂-CH₂)ₙOH (IV)
dans laquelle
R = un alkyle en C₆ à C₁₈
n = 3 à 20.

2. Concentrat de désinfectant selon la revendication 1, **caractérisé en ce que** les glycoléthers aliphatiques comprennent des radicaux alkyle (R) en position terminale présentant des longueurs de chaîne carbonée de C₁ à C₄.

3. Concentrat de désinfectant selon les revendications 1 ou 2, **caractérisé en ce que** les éthoxylates d'alcool gras (alkylpolyéthylèneglycoléther) comprennent des alcools de départ linéaires ou ramifiés présentant une longueur de chaîne carbonée du radical alkyle (R) en position terminale de 6 à 18 et des séquences d'OE de 3 à 20 moles.

4. Concentrat de désinfectant selon l'une quelconque des revendications 1 à 3, **caractérisé en ce qu'**il contient des complexants, en particulier de l'EDTA et/ou du NTA.

5. Concentrat de désinfectant selon l'une quelconque des revendications 1 à 4, **caractérisé en ce qu'**il contient environ 1 à 20% en poids de biocide primaire à base d'alkylamines de formule générale I et/ou des agents tensioactifs amphotères de formule générale II, en particulier 6 à 10% en poids.

6. Concentrat de désinfectant selon l'une quelconque des revendications 1 à 5, contenant 3 à 8% en poids, de préférence 5 à 7% en poids, d'alkylamine de formule générale I.

7. Concentrat de désinfectant selon l'une quelconque des revendications 1 à 6, contenant 2 à 5% en poids d'acide alkylaminoacétique de formule générale II, de préférence 3 à 4% en poids.

8. Concentrat de désinfectant selon l'une quelconque des revendications 1 à 7, **caractérisé en ce qu'**il contient 2 à 15% en poids de glycoléther, en particulier 5 à 8% en poids.

9. Concentrat de désinfectant selon l'une quelconque des revendications 1 à 8, **caractérisé en ce qu'**il contient 2 à 10% en poids d'éthoxylates d'alcool gras (alkylpolyglycoléther) à base d'alcools de départ présentant un radical alkyle en position terminale R = C₆ à C₁₈ et 3 à 20 moles d'OE, en particulier 4 à 7% en poids, et 5 à 15% en poids de complexant, calculé par rapport à l'EDTA/NTA, en particulier 7 à 10% en poids.

10. Concentrat de désinfectant selon l'une quelconque des revendications 1 à 9, **caractérisé en ce que** le pH du mélange est de 9 à 11, en particulier de 9,5 à 10,5.

11. Utilisation des concentrats de désinfectant selon l'une quelconque des revendications 1 à 10, **caractérisée en ce qu'**on les utilise en des concentrations de 0,1 à 6,0% en poids, en particulier de 0,5 à 4% en poids, pour la préparation de solutions aqueuses claires prêtes à l'emploi.
